# EUROPEAN PATENT APPLICATION

(11) **EP 4 832 657 A1**
(43) Date of publication of application: **28.10.2026**
(21) Application number: 24907219.0
(22) Date of filing: 09.12.2024
(51) Int. Cl.: H04W 92/20, H04W 16/26, H04W 56/00, H04W 72/231, H04W 84/00, H04W 88/08

(54) **COMMUNICATION DEVICE, CONTROL METHOD, AND PROGRAM**

(30) Priority: 22.12.2023 JP 2023216606
(71) Applicant: Canon Kabushiki Kaisha, Tokyo 146-8501 (JP)
(72) Inventor: AOYAGI MIZUHO, Tokyo 146-8501 (JP); MAEDA YOICHI, Tokyo 146-8501 (JP)
(74) Representative: Canon Europe Limited
(86) International application number: PCT/JP2024/043395
(87) International publication number: WO 2025/134834

(57) **Abstract**

There is disclosed a communication apparatus having an MBSR (Mobile Base Station Relay) operation function. The communication apparatus is operable in a first mode in which only another communication apparatus having the MBSR operation function is connected to a DU (Distribution Unit) of the communication apparatus, the first mode being a mode in which communication between the other communication apparatus and an IAB (Integrated Access and Backhaul) donor is relayed.

## Description

### Technical Field

The present disclosure relates to a communication apparatus, a control method, and a program.

### Background Art

Cellular communication standards are established by the 3rd Generation Partnership Project (3GPP (registered trademark)). In the cellular communication standards of 3GPP (hereinafter referred to as "3GPP standards"), Integrated Access and Backhaul (IAB), which integrates an access link and a backhaul link, is being standardized (see PTL 1).

In IAB, radio resources used for an access link between a base station (gNB) and a user terminal (UE, User Equipment) are also used in a backhaul link. For example, in IAB, radio resources in a millimeter-wave band such as a 28 GHz band can be used. The use of IAB allows a relay device (IAB node) to relay communication between a base station device (IAB donor) and a terminal device via a wireless link, thereby enabling area coverage to be expanded at low cost as compared with the use of a wired link such as an optical fiber.

Up to Release 17, which is a standardization phase of 3GPP, specifications have been formulated for fixed base stations (IAB nodes without mobility).

Currently, 3GPP has proceeded to the phase of Release 18, in which vehicle-mounted relays are being actively discussed as use cases. In addition, as the formulation of specifications for architectures and protocols for implementing such use cases, discussions on mobile IAB or Mobile Base Station Relay (MBSR) are being actively conducted. In IAB using millimeter waves, an MBSR has difficulty maintaining a connection (coverage of communication services) to an IAB donor and an IAB node in locations (such as urban areas with buildings) difficult for radio waves from an IAB node to reach due to obstacles or the like.

### Citation List

### Patent Literature

PTL 1: PCT Japanese Translation Patent Publication No. 2019-534625

### Summary of Invention

### Technical Problem

3GPP Release 18 is being standardized to restrict an IAB node from being further connected under an MBSR so as to simplify the participation of the MBSR in an IAB topology. That is, the MBSR supports only a single hop. In contrast, enabling the creation of a multi-hop configuration in which another MBSR is further connected under an MBSR can enhance path flexibility. In this case, the cell coverage area is expected to be flexibly expandable.

The present invention has been made in view of the above. An object of one aspect of the present invention is to provide a mechanism capable of providing a stable communication service to an MBSR located in an area difficult for radio waves to reach.

### Solution to Problem

A communication apparatus according to one aspect of the present invention is a communication apparatus having an MBSR (Mobile Base Station Relay) operation function, wherein
the communication apparatus is operable in a first mode in which only another communication apparatus having the MBSR operation function is connected to a DU (Distribution Unit) of the communication apparatus, the first mode being a mode in which communication between the other communication apparatus and an IAB (Integrated Access and Backhaul) donor is relayed.

### Advantageous Effects of Invention

One aspect of the present invention can provide a mechanism capable of providing a stable communication service to an MBSR located in an area difficult for radio waves to reach.

### Brief Description of Drawings

[Fig. 1] Fig. 1 is a diagram illustrating an example of a communication system.
[Fig. 2A] Fig. 2A is a diagram illustrating a software configuration of an MBSR.
[Fig. 2B] Fig. 2B is a diagram illustrating a hardware configuration of an MBSR.
[Fig. 2C] Fig. 2C is a block diagram illustrating an example of a hardware configuration of an IAB donor according to the present embodiment.
[Fig. 2D] Fig. 2D is a block diagram illustrating an example of a hardware configuration of an IAB donor according to the present embodiment.
[Fig. 3] Fig. 3 is a flowchart illustrating a process for generating an instruction to change a mode to a relay mode by an IAB donor in the present embodiment and the like.
[Fig. 4] Fig. 4 is a flowchart of an example of mode determination for a relay candidate MBSR.
[Fig. 5] Fig. 5 illustrates a sequence in which an IAB donor requests a relay candidate MBSR (without UE) to perform relaying.
[Fig. 6] Fig. 6 illustrates relay request message format RRC (IAB donor to relay candidate MBSR).
[Fig. 7] Fig. 7 illustrates relay request message format BAP (IAB donor to relay candidate MBSR).
[Fig. 8A] Fig. 8A is a flowchart illustrating an example of a process by an MBSR in the present embodiment.
[Fig. 8B] Fig. 8B is another flowchart illustrating an example of a process by an MBSR in the present embodiment.
[Fig. 9] Fig. 9 illustrates a sequence in which a disconnected MBSR requests a relay candidate MBSR (without UE) to perform relaying.
[Fig. 10A] Fig. 10A is an explanatory diagram of an example of relay request message format broadcasting (disconnected MBSR to relay candidate MBSRs).
[Fig. 10B] Fig. 10B is an explanatory diagram of another example of relay request message format broadcasting (disconnected MBSR to relay candidate MBSRs).
[Fig. 11] Fig. 11 illustrates relay request message format RRC (unicast) (disconnected MBSR to relay candidate MBSR).
[Fig. 12] Fig. 12 illustrates a sequence in which an IAB donor requests a new DU of a relay candidate MBSR (with UE) to perform relaying.
[Fig. 13] Fig. 13 illustrates a sequence in which a disconnected MBSR requests a new DU of a relay candidate MBSR (with UE) to perform relaying.
[Fig. 14] Fig. 14 is a flowchart of another example of mode determination for a relay candidate MBSR.
[Fig. 15] Fig. 15 illustrates a sequence in which an IAB donor requests a relay candidate MBSR (with UE) to perform relaying.
[Fig. 16] Fig. 16 illustrates a sequence in which a disconnected MBSR requests a relay candidate MBSR (with UE) to perform relaying.

### Description of Embodiments

Embodiments will be described in detail hereinafter with reference to the accompanying drawings. In the following description, "number ***" in TS *** represents the number of a technical specification in the 3GPP standards.

3GPP Release 18 is being standardized to restrict an IAB node from being further connected under an MBSR so as to simplify the participation of the MBSR in an IAB topology. That is, the MBSR supports only a single hop. In contrast, enabling the creation of a multi-hop configuration in which another MBSR is further connected under an MBSR can enhance path flexibility, and the cell coverage area is expected to be flexibly expandable. Accordingly, an object of the following embodiments is to provide a specific mechanism for implementing an IAB topology with the multi-hop configuration.

In a specific use case, if an MBSR is disconnected from an IAB donor and fails to detect any other connectable node, the MBSR is not connectable to another MBSR if the other MBSR is located nearby. Accordingly, a problem arises in that a UE under an MBSR is unable to perform data communication (i.e., a service interruption state occurs) until the MBSR finds a parent node. However, the specification of an MBSR supporting only a single hop lacks a means (trigger) for requesting another MBSR to perform relaying. Accordingly, one object of the following embodiments is to provide a mechanism of an operation that triggers another MBSR to start operating as a relay node for an MBSR having no connectable parent node. As another aspect, one object of the following embodiments is to enhance the convenience of cellular communication.

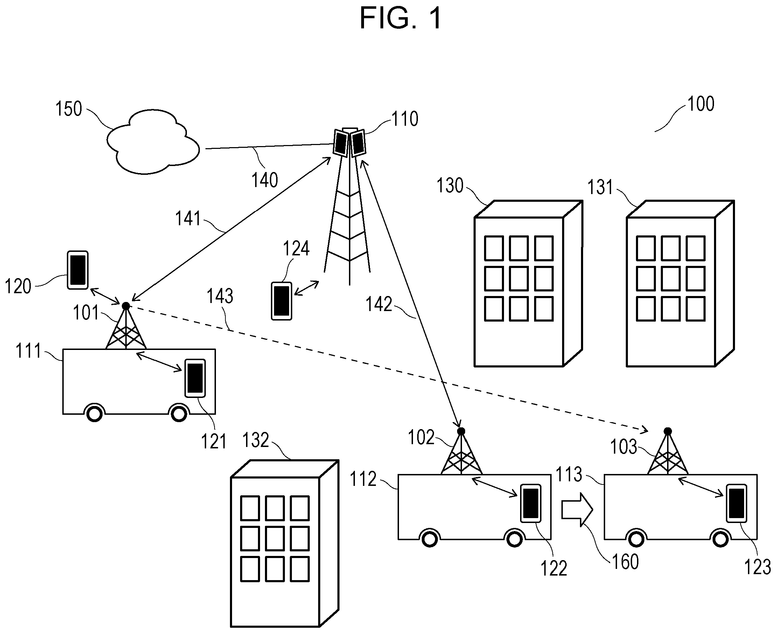

Fig. 1 illustrates a mobile wireless communication system, such as a 5G system, including a wireless integrated access and backhaul network that supports an MBSR of a communication system 100. Although 5G will mainly be described herein, the present invention is also applicable to systems other than 5G (e.g., 5G Advanced, 6G, etc.).

The communication system 100 includes a plurality of UEs 120 to 123, a core network 150, a main base station 110, and MBSRs 101 and 102 mounted on vehicles 111 and 112. The vehicles 111 and 112 may each be in any form such as, for example, a bus, a train, a taxi, or a car. A vehicle 113, an MBSR 103, and a remote UE 123 represent the vehicle 112, the MBSR 102, and the remote UE 122 that have moved, respectively. That is, the vehicle 113, the MBSR 103, and the remote UE 123 are identical to the vehicle 112, the MBSR 102, and the remote UE 122, respectively. However, these are distinguished for convenience of description, and the distinction does not necessarily coincide with a disconnection timing described below. The main base station 110, also referred to as an IAB donor 110, is connected to the core network 150 via a wired link 140 (preferably an optical fiber or any other wired means). In the embodiments described below, the IAB donor 110 is a 5G base station (gNB) with additional functions for supporting an IAB function, as defined in the 3GPP TS 38.300 v17.2.0 specification.

The MBSRs 101 and 102, also referred to as mobile IAB nodes, are mounted on the vehicles 111 and 112 and provide network coverage and capacity expansion. The IAB donor 110 can communicate not only with UEs within vehicles, such as the remote UEs 121 and 122 (123), but also with UEs outside vehicles, such as the UE 120. Thus, the IAB donor 110 and the MBSRs 101 and 102 form a backhaul network, an IAB network, or an IAB topology that accommodates the UEs 121 and 122. In the following description, the terms "IAB network" and "IAB topology" are used interchangeably. IAB specifications are defined in several 3GPP standard documents, such as the following:
- TS 38.300 RAN Architecture (V17.2.0)
- TS 38.321 MAC Protocol (V17.2.0)
- TS 38.331 Radio Resource Control (RRC) Protocol (V17.2.0)
- TS 38.340 Backhaul Adaptation Protocol Layer (V17.2.0)
- TS 38.401 RAN Architecture (V17.2.0)
- TS 38.423 Xn Application Protocol (V17.2.0)
- TS 38.473 F1 Application Protocol (V17.2.0)

An overview up to the occurrence of a problem caused by a single hop of an MBSR will be described with reference to Fig. 1.

The IAB donor 110 is wirelessly connected to the MBSR 101 thereunder via a wireless backhaul link 141, and is similarly wirelessly connected to the MBSR 102 via a wireless backhaul link 142. The IAB donor 110 can perform data communication with the UE 121 in the vehicle 111 equipped with the MBSR 101, and can perform data communication with the UE 122 in the vehicle 112 equipped with the MBSR 102.

In a case where the vehicle 112 moves to the position of the vehicle 113 by moving in the direction of an arrow 160, the MBSR 102 mounted on the vehicle moves to the MBSR 103, and the UE 122 on board the vehicle moves to the UE 123. In that case, the MBSR 103 may be hidden behind an obstacle 130 such as a building. In this case, the radio wave strength for the wireless backhaul link 142 with the IAB donor 110 gradually attenuates, finally resulting in radio link disconnection and the occurrence of a radio link failure (RLF).

After the RLF, the MBSR 103 searches for the IAB donor 110, which has been connected thereto as a parent node, and attempts to establish a connection. However, obstacles 130 and 131 prevent the connection. As a result, under the MBSR 103, the UE 123 is also unable to perform data communication (i.e., a service interruption state occurs). By searching for a base station connectable as a parent node (including an IAB donor and an IAB node), the MBSR 103 can detect the MBSR 101 having high received power as a parent node. Also in this case, if the MBSR 101 supports only a single hop, the MBSR 101 will reject a connection request from the MBSR 103. As a result, the service interruption state in the MBSR 103 persists.

Next, mechanisms capable of at least partially resolving such a problem will be described in detail through embodiments.

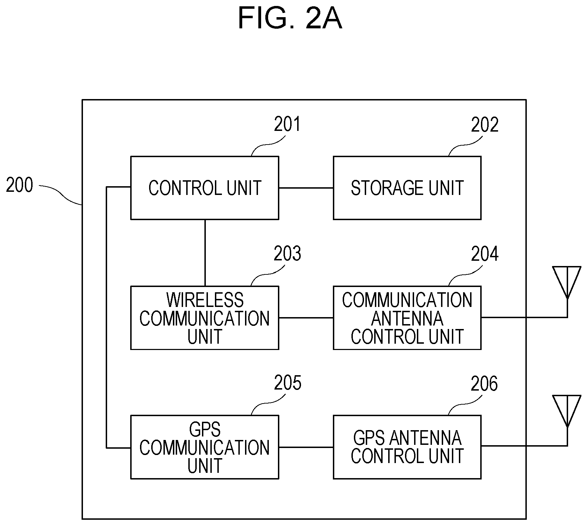

Fig. 2A is a hardware functional block diagram of the MBSR 102 in the embodiments described below. While a configuration of the MBSR 102 will now be described, the same may apply to the MBSR 101.

The MBSR 102 includes hardware including a control unit 201, a storage unit 202, a wireless communication unit 203, and a communication antenna control unit 204.

The control unit 201 executes a control program stored in the storage unit 202 to control the entire apparatus. The control unit 201 includes, for example, one or more processors such as a CPU or an MPU, and executes a control program read into a RAM, which is the storage unit 202, to control the entire communication apparatus. Processes performed by the control unit 201 described in flowcharts described below can also be implemented by using a hardware circuit such as an ASIC or an FPGA. ASIC is an abbreviation for Application Specific Integrated Circuit. FPGA is an abbreviation for Field Programmable Gate Array. The processes described in the flowcharts described below can also be implemented by cooperation between a hardware circuit and a processor such as a CPU or an MPU.

The storage unit 202 stores a control program executed by the control unit 201 and various types of information such as information on UEs to be connected and connection strength with a base station or the IAB donor 110. The storage unit 202 may include a main storage unit and an auxiliary storage unit. The main storage unit is, for example, a ROM (Read Only Memory) or a RAM (Random Access Memory). The main storage unit may store or temporarily store programs and data such as an OS (Operating System), which is basic software executed by the control unit 201, and application software. The auxiliary storage unit is, for example, an HDD (Hard Disk Drive) or an SSD (Solid State Drive), and may store data related to application software and the like. For example, a control program stored in a non-volatile storage area is loaded into a RAM (Random Access Memory) and executed by a processor constituting the control unit 201. In this manner, the control unit 201 and the storage unit 202 may function as a so-called computer.

The wireless communication unit 203 performs cellular network communication such as 5G compliant with the 3GPP standards. Specifically, the wireless communication unit 203 performs communication control of a RAN (Radio Access Network) such as 5G NR (New Radio) and communication control of upper layers to perform cellular network communication. Although 5G is illustrated as an example of cellular network communication, the present invention is not limited thereto, and the control of the present embodiment can also be implemented based on cellular network communication such as 5G Advanced/6G. In this case, the wireless communication unit 203 performs cellular network communication such as 5G Advanced or 6G compliant with the 3GPP standards.

The communication antenna control unit 204 controls an antenna used for wireless communication executed in the wireless communication unit 203.

A GPS communication unit 205 receives satellite signals from GPS (Global Positioning System) satellites, and acquires position information of a current position including position identification information such as longitude/latitude information, and current time information. The GPS communication unit 205 may have a function of measuring (positioning) the current position based on satellite signals. Instead of or in addition to GPS, any other GNSS (Global Navigation Satellite System) may be used.

A GPS antenna control unit 206 controls an antenna (not illustrated) for GPS communication performed by the GPS communication unit 205.

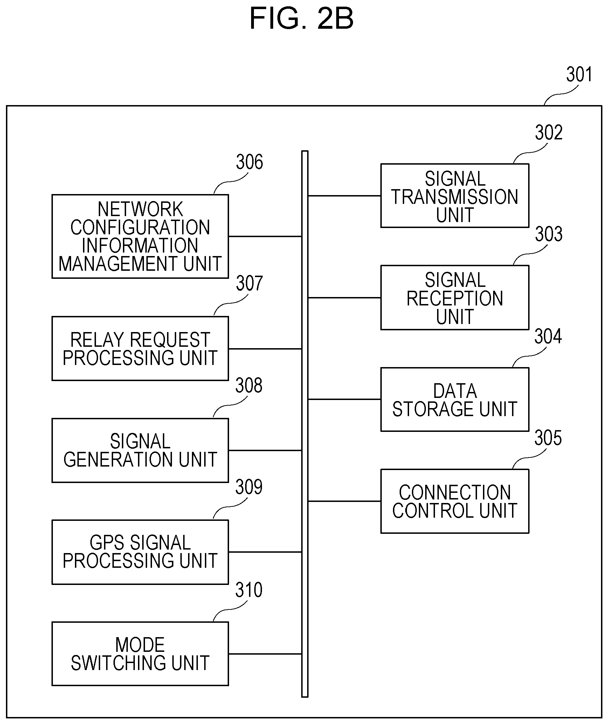

Fig. 2B is a software functional block diagram of an MBSR in the embodiments described below. While a configuration of the MBSR 102 (103) will now be described, the same may apply to the MBSR 101.

A software functional block 301 is stored in the storage unit 202 and executed by the control unit 201. The software functional block 301 includes a signal transmission unit 302, a signal reception unit 303, a data storage unit 304, a connection control unit 305, a network configuration information management unit 306, a relay request processing unit 307, and a signal generation unit 308. The software functional block 301 further includes a GPS signal processing unit 309 and a mode switching unit 310.

The signal transmission unit 302 and the signal reception unit 303 control the wireless communication unit 203 via the control unit 201, and execute cellular network communication, such as LTE and 5G compliant with the 3GPP standards, with the IAB donor 110, another MBSR, and the UE 122.

The data storage unit 304 controls and manages the storage unit 202, which is an entity, and stores and holds the software itself, information on a connection with the IAB donor 110, information regarding the UE 122, and the like. Inter-node information can be collected by broadcast signals and communication packets accompanying various control PDUs of BAP (hereinafter, referred to as BAP control packets). Information from a UE can be collected based on, for example, an RRC status.

The connection control unit 305 controls the communication antenna control unit 204 via the control unit 201 during wireless communication. The connection control unit 305 generates a connection control signal based on information generated by the network configuration information management unit 306 (described below). In the MBSR 102 (103), the connection control unit 305 determines a connection to another communication apparatus (in the present embodiment, the MBSR 101 described below) in a case where a response specifying a relay-only connection is received from the other communication apparatus (a connection in a relay mode).

The network configuration information management unit 306 manages configuration information of an IAB network configured to include the MBSR 102 (103). The network configuration information management unit 306 also manages type information of UEs, IAB nodes, and MBSRs requesting connection to the MBSR 102 (103).

The relay request processing unit 307 functions in the MBSR 102 (103) (second, fourth, and sixth embodiments described below). In a case where a radio link with a parent node is disconnected, the relay request processing unit 307 performs various processes for a relay request to be made to another MBSR (in the present embodiment, the MBSR 101 described below). For example, the relay request processing unit 307 generates a relay request in response to disconnection of a radio link with a parent node as a trigger. At this time, the relay request processing unit 307 may determine another MBSR (in the present embodiment, the MBSR 101 described below) that is a destination for the relay request. In a case where broadcast signals are received from a plurality of other MBSRs before and after the disconnection of the radio link, the relay request processing unit 307 may determine one of the plurality of other MBSRs as another MBSR that is a destination for the relay request. In this case, for example, the relay request processing unit 307 may determine the MBSR having the highest communication quality as another MBSR that is a destination for the relay request.

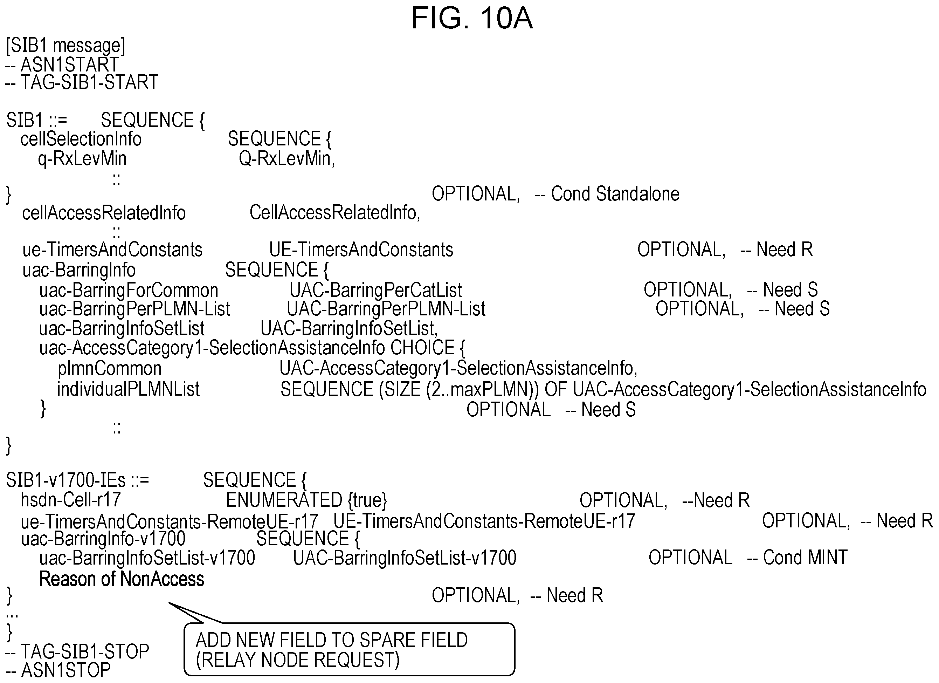

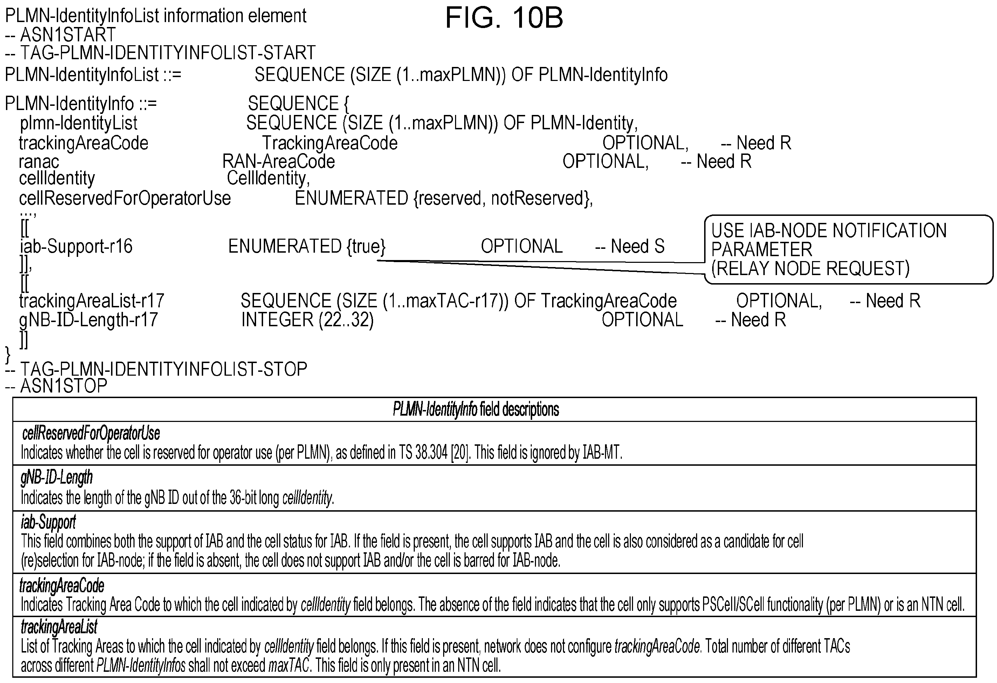

The signal generation unit 308 manages and issues various signals generated by the connection control unit 305. In the MBSR 102 (103), the signal generation unit 308 generates a signal related to a relay request (described below) in cooperation with the relay request processing unit 307. The relay request may be generated by, for example, adding a parameter "relay request" to a spare field of an RRC SetUp Request message. The relay request may be generated by adding information indicating a relay request to broadcast information (SS/PBCH Block). This will be described below with reference to Figs. 10A and 10B.

The GPS signal processing unit 309 performs communication compliant with GPS standards. The GPS signal processing unit 309 controls an antenna for GPS communication performed by the GPS communication unit 205, and calculates a current position and time from received GPS information. The GPS signal processing unit 309 outputs information in an NMEA (National Marine Electronics Association)-0183 format or the like, and performs a process of storing the current position and time in the data storage unit 304 as necessary.

The mode switching unit 310 functions in the MBSR 101. The mode switching unit 310 switches an operation mode between a normal mode and a relay mode. In the present embodiment, the mode switching unit 310 switches from the normal mode to the relay mode in response to a request (a request for transition to the relay mode) from the IAB donor 110 described below. Alternatively, in addition to or instead of this, the mode switching unit 310 switches from the normal mode to the relay mode in response to a request from an MBSR whose radio link with the IAB donor 110 has been disconnected.

The normal mode corresponds to a mode in which a DU (Distributed Unit), which serves as a radio functional unit of the MBSR 101, allows only UEs to connect thereto and prohibits connection of other IAB nodes (including MBSRs). That is, the normal mode corresponds to a single-hop supporting mode that permits connection with a UE but does not permit connection with a child node under the MBSR 101.

The relay mode refers to a mode in which an MBSR is not connected to any UE and performs only relaying for another MBSR serving as a child node. The relay mode corresponds to a mode in which multi-hop is supported and the DU serving as the radio functional unit allows only MBSRs to connect thereto.

The normal mode may be a mode that does not permit connection of an MBSR under the MBSR 101 but permits connection of both a UE and a normal IAB node other than an MBSR. The relay mode may be a mode that permits connection of another IAB node including an MBSR. The relay mode may be a mode that permits connection of both a UE and another IAB node including an MBSR.

Activation of a new DU of the MBSR 101 described below (hereinafter also referred to as a "new DU") first involves confirming that a bandwidth is available for allocation. Subsequent to the confirmation, a functional unit equivalent to the software functional block 301 is created. At this time, a new cell having a frequency different from that of a cell formed by an initial DU is formed. At this time, the MBSR 101 performs dual activation of two DUs, and various methods can be adopted for such activation. An antenna and a hardware mechanism for a second DU may be separately prepared, and the processor of the MBSR 101 may control the antenna and the hardware mechanism to activate a new DU. A plurality of DUs may be activated by software while sharing an antenna and a hardware mechanism. In this case, the MBSR 101 activates a plurality of tasks corresponding to the software functional block 301 that performs control to implement functions of a DU. Tasks activated on the MBSR 101 only need to access an antenna and a hardware mechanism by using a time-division technique or the like to substantially simultaneously implement the functions of the existing DU and the functions of the new DU.

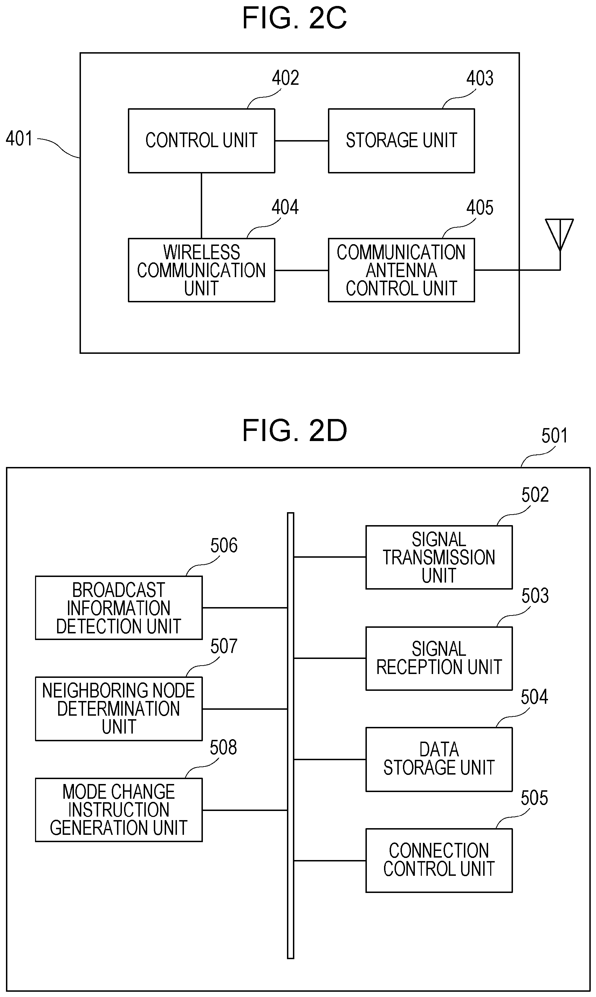

Fig. 2C is a block diagram illustrating an example of a hardware configuration 401 of the IAB donor 110 according to the present embodiment.

The hardware configuration 401 includes a control unit 402, a storage unit 403, a wireless communication unit 404, and a communication antenna control unit 405.

The control unit 402 executes a control program stored in the storage unit 403 to control the entire apparatus. The control unit 402 includes, for example, one or more processors such as a CPU or an MPU, and executes a control program read into a RAM, which is the storage unit 403, to control the entire communication apparatus. Processes performed by the control unit 402 described in flowcharts described below can also be implemented by using a hardware circuit such as an ASIC or an FPGA. The processes described in the flowcharts described below can also be implemented by cooperation between a hardware circuit and a processor such as a CPU or an MPU.

The storage unit 403 stores a control program executed by the control unit 402 and various types of information such as cell information, connected terminal information, IAB routing information, and position information. The storage unit 403 may include a main storage unit and an auxiliary storage unit. The control unit 402 and the storage unit 403 may function as a so-called computer.

The wireless communication unit 404 performs cellular network communication such as LTE and 5G compliant with the 3GPP (registered trademark) standards.

The communication antenna control unit 405 controls an antenna (not illustrated) for wireless communication performed by the wireless communication unit 404.

Fig. 2D is a block diagram illustrating an example of a hardware configuration of the IAB donor 110 according to the present embodiment.

A software function 501 includes a signal transmission unit 502, a signal reception unit 503, a data storage unit 504, a connection control unit 505, a broadcast information detection unit 506, a neighboring node determination unit 507, and a mode change instruction generation unit 508.

The signal transmission unit 502 and the signal reception unit 503 perform cellular network communication such as LTE and 5G compliant with the 3GPP standards with a terminal device. Control plane signals are received by the signal reception unit 503.

In the present embodiment, the signal transmission unit 502 transmits a transition instruction generated by the mode change instruction generation unit 508 described below to an MBSR that is a relay candidate (described below).

In the present embodiment, the signal reception unit 503 acquires information enabling determination as to whether a counterpart communication apparatus is an MBSR (i.e., an IAB node of a type involving mobility). Such information is optional and may be, for example, information that explicitly indicates or suggests that the counterpart communication apparatus is an MBSR, information that explicitly indicates or suggests that the counterpart communication apparatus is not an MBSR, or the like. In the present embodiment, such information is IAB node type information, and details thereof will be described below.

The data storage unit 504 stores and holds the software itself, IAB routing information, information regarding connected terminals, current time information, position information, movement route information, and the like.

The connection control unit 505 controls an antenna for wireless communication performed by the wireless communication unit 104.

The broadcast information detection unit 506 detects broadcast information of neighboring base stations and MBSRs.

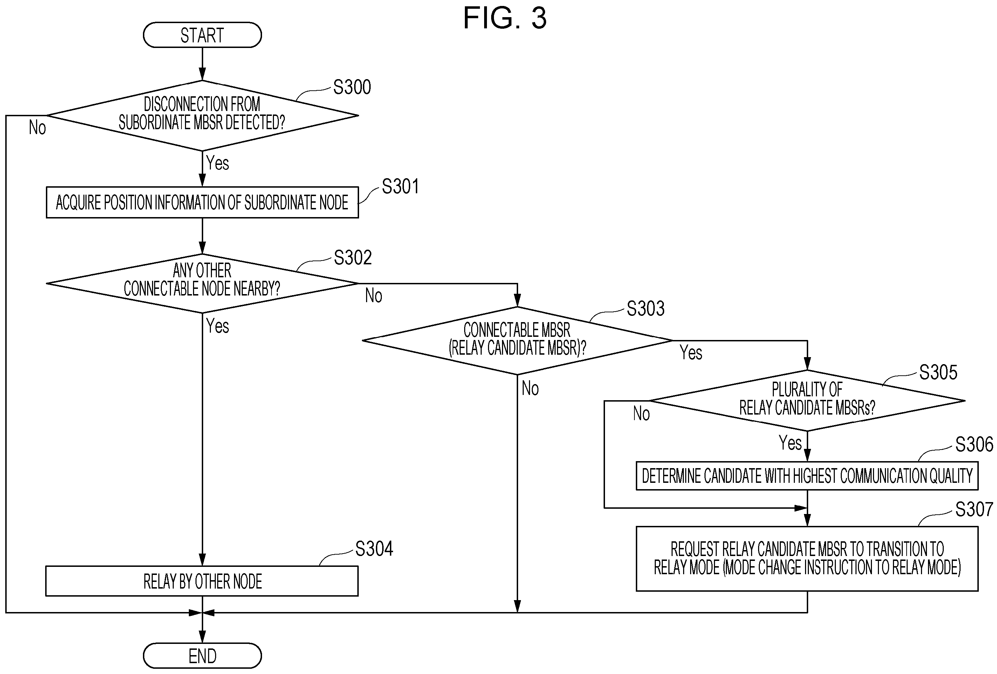

In a case where a radio link with an MBSR is disconnected, the neighboring node determination unit 507 determines whether another node connectable to the MBSR is located near the MBSR. An example of a determination method will be described below in relation to S302 in Fig. 3 described below.

The mode change instruction generation unit 508 generates a request for transition to the relay mode (an instruction to change to the relay mode). The request for transition to the relay mode is transmitted to an MBSR that is a relay candidate (described below). Conditions and the like for generating the request for transition to the relay mode will be described below.

### <First Embodiment: Relay request from IAB donor to MBSR (without UE)>

Fig. 3 illustrates a processing flow for generating an instruction to change the mode to the relay mode by the IAB donor 110 in the present embodiment (the same applies to third and fifth embodiments described below).

The IAB donor 110 determines whether a connection with an MBSR under the IAB donor 110 is disconnected (S300). In this example, as described above, a case is assumed in which a connection with the MBSR 103 is disconnected. In this case, the IAB donor 110 acquires position information of each node thereunder (e.g., IAB nodes and MBSRs) (S301). The IAB donor 110 may directly acquire, from each node thereunder, the position information of the node by using an RRC message. The position information may be included in a Measurement Report. The IAB donor 110 may acquire position information of each node from the core network 150. Then, based on the position information, the IAB donor 110 determines whether another node (here, an IAB node) or another IAB donor, which is connectable to the MBSR 103, is located near the MBSR 103 (S302). The term "near the MBSR 103" refers to a region within a predetermined distance from the position of the MBSR 103, and the predetermined distance may be defined in advance.

If another node connectable to the MBSR 103 is located, the MBSR 103 is connected via the other node (S304). On the other hand, if no other node connectable to the MBSR 103 is located, the IAB donor 110 determines whether one or more other MBSRs connectable to the MBSR 103 are located (S303). If no other MBSR connectable to the MBSR 103 is located, the process ends. On the other hand, if only one other MBSR connectable to the MBSR 103 is located, the IAB donor 110 transmits, to the other MBSR, a request for transition to the relay mode (an instruction to change to the relay mode) (S307). If a plurality of other MBSRs connectable to the MBSR 103 are located (S305), for example, the following operation may be performed. That is, based on Measurement Reports acquired in advance from the other MBSRs, another MBSR having the highest communication quality with the MBSR 103 is determined as a relay candidate (S306). Each of the other MBSRs may notify the IAB donor 110 of communication quality between the MBSR 103 and itself by using a spare field "nonCriticalExtension". This spare field is specified in the Measurement Report message format defined in Chapter 6.2.2 of TS 38.331. For example, a field "MBSR communication information" indicating communication quality may be added to the spare field. In this case, the field of the MBSR communication information may include communication status information (such as delay time).

In this case, the IAB donor 110 transmits, to the other MBSR having the highest communication quality, a request for transition to the relay mode (an instruction to change to the relay mode) (S307).

In Fig. 3, step S306 may be omitted. In this case, another MBSR closest to the position of the MBSR 103 for which disconnection is detected may be determined as a relay candidate, or another MBSR may be determined as a relay candidate based on another criterion.

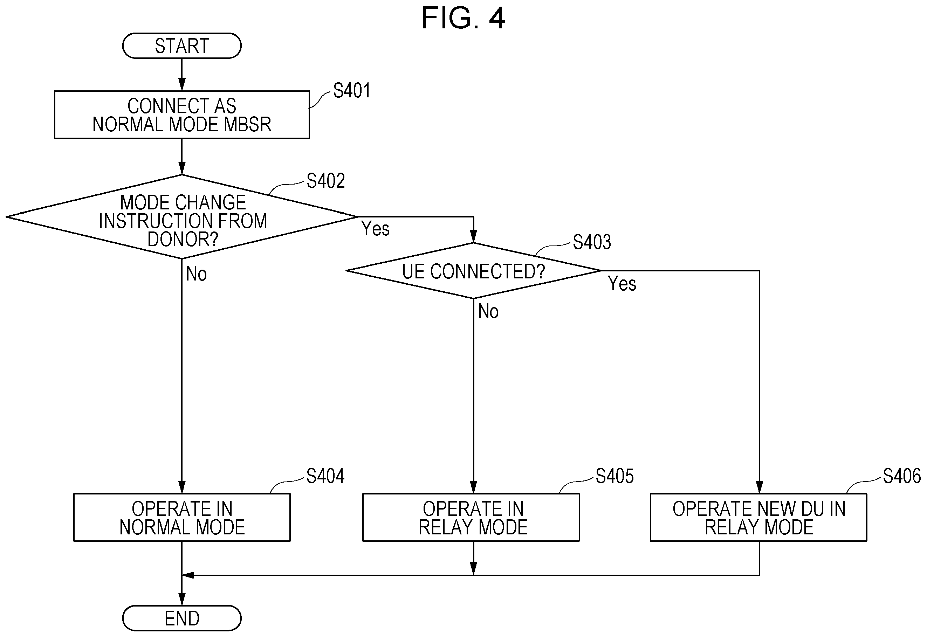

Fig. 4 illustrates a processing flow for mode determination for an MBSR in the present embodiment (the same applies to second to fourth embodiments described below).

The MBSR is connected to a network as an MBSR in the normal mode (S401). If a mode change instruction from the IAB donor 110 is received (S402), the MBSR checks the presence or absence of a UE connected thereto (S403). If a connected UE is located, the MBSR activates a new DU in the relay mode (S406). If no connected UE is located, the MBSR operates in the relay mode (S405). If no change instruction is received in S402, the MBSR continues to operate in the normal mode (S404). As a method for activating the new DU in the relay mode, a plurality of DUs may be activated by using a virtualization technology. Depending on the communication performance of the MBSR, functions may be divided to provide a service.

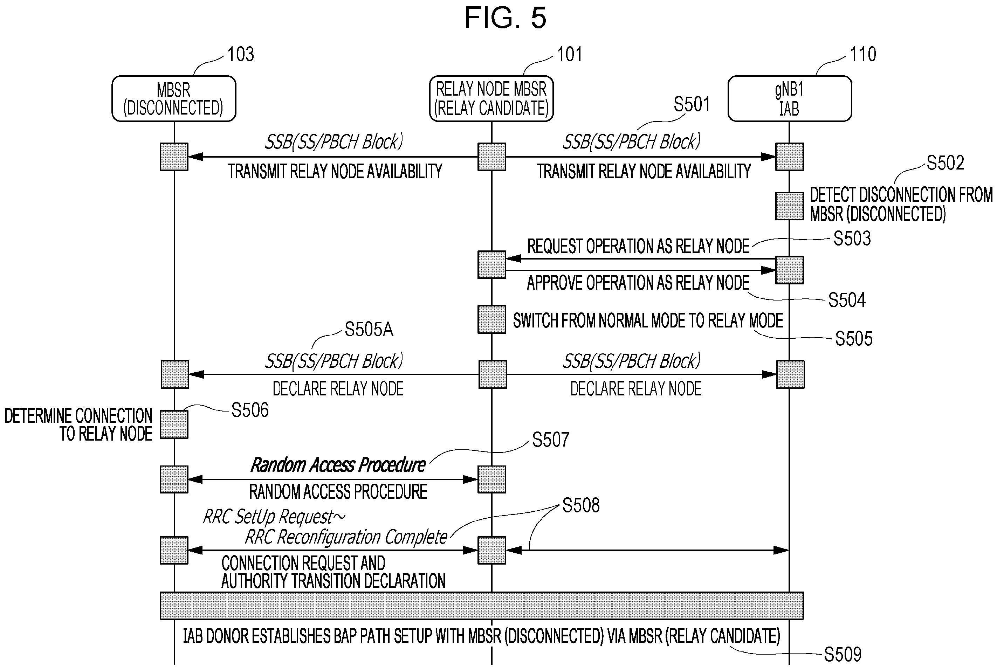

Fig. 5 is a sequence diagram illustrating a flow from when the IAB donor 110 detects disconnection of the MBSR 103 until the MBSR 103 is connected to the MBSR 101 operating as a relay node.

The MBSR 101 broadcasts that the MBSR 101 is operable as a relay node (S501). An SSB (Synchronization Signal Block) message is used for this broadcast. However, as the information to be broadcast in S501, rsinfo may be newly defined in nonCriticalExtension, which is defined in SIB1 (or another SIB other than SIB1), and information indicating that the MBSR 101 is operable in the relay mode may be broadcast. Alternatively, the MBSR 101 may provide notification that the MBSR 101 is operable as a relay node via an F1 message or an RRC message.

The MBSR 103 receives a broadcast signal from the MBSR 101. However, the MBSR 103 does not respond because the MBSR 103 is connected to a parent node (i.e., the IAB donor 110) at this stage. Thereafter, if the MBSR 103 becomes hidden behind an obstacle due to its movement, the wireless connection with the IAB donor 110 serving as a parent node is disconnected. Upon detecting that the connection with the MBSR 103 under the IAB donor 110 is disconnected (S502), the IAB donor 110 transmits, to the MBSR 101 as another child node connected thereto, a request for connection in the relay mode (S503). At this time, the request for connection may be transmitted on condition that it can be confirmed based on position information or the like that the MBSR 103 is in a connectable state.

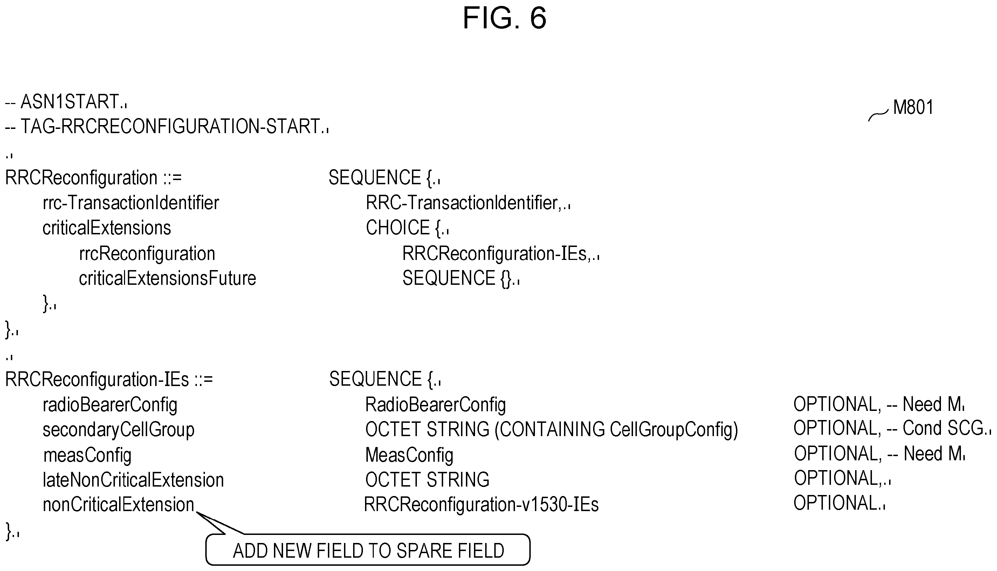

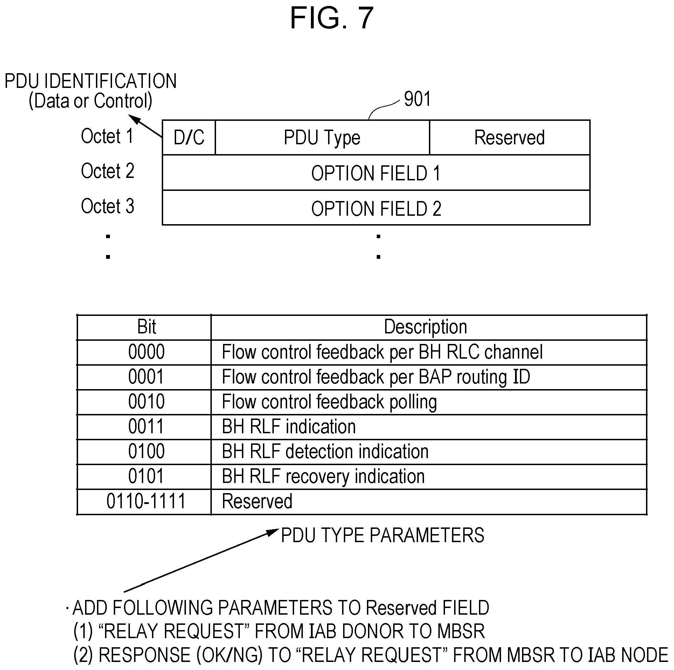

In a transmission signal from the IAB donor 110 to the MBSR 101, a parameter "connection request to disconnected MBSR" is added to a spare field of an RRC Reconfiguration message of an RRC protocol in Fig. 6. Alternatively, a parameter "connection request to disconnected MBSR" may be added to a spare field of a PDU Type S901 of a BAP message in Fig. 7, and the request for connection may be transmitted. BAP is an abbreviation for Backhaul Adaptation Protocol.

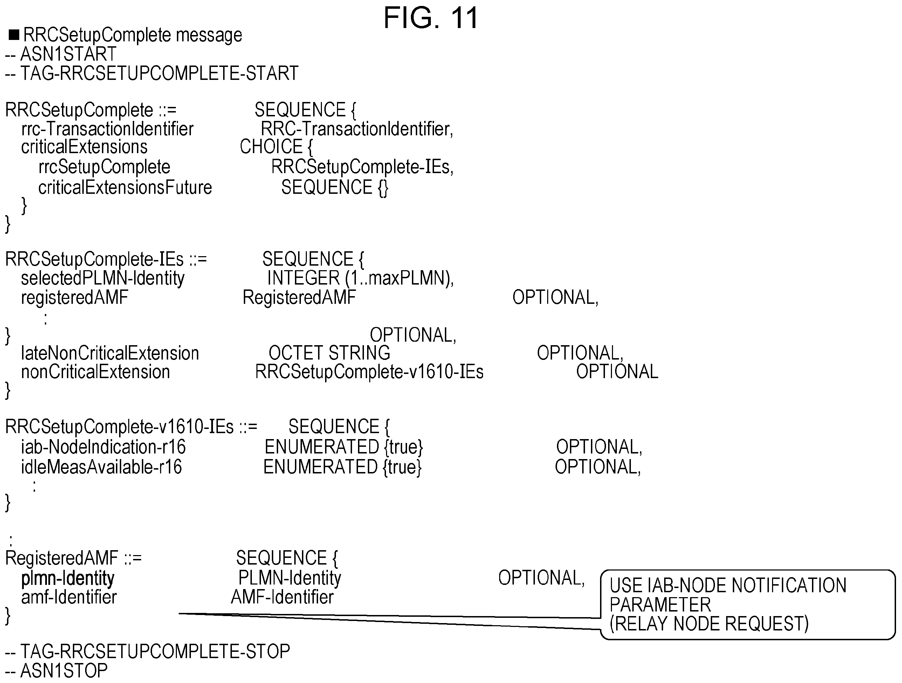

In the present embodiment, it is assumed that the MBSR 101 is not connected to a UE and operates in the relay mode in accordance with a response from the IAB donor 110 (see S405 in Fig. 4). Specifically, upon receiving the request from the IAB donor 110, the MBSR 101 switches from the normal mode, which supports only a single hop, to the relay mode (S504). That is, the MBSR 101 transmits, to the IAB donor 110, a response indicating that the MBSR 101 is connectable in the relay mode (S504), and switches from the normal mode to the relay mode (S505). Then, the MBSR 101 transmits a broadcast signal indicating that the MBSR 101 is operating in the relay mode (S505A). As a means for providing notification that the MBSR 101 is operating in the relay mode, the MBSR 101 may transmit the notification not via broadcasting, but via unicasting to the MBSR 103 by using an RRC Reconfiguration message of an RRC protocol. At this time, a message format for broadcasting a relay request may be included in an RRC Reconfiguration message of an RRC protocol illustrated in Fig. 11 described below.

Since the MBSR 103 has recognized the MBSR 101, which is connectable as a parent node, the MBSR 103 determines to connect to the MBSR 101 serving as a parent node (S506). Then, the MBSR 103 performs a random access procedure for connecting to the MBSR 101 (S507), requests a connection via an RRC SetUp Request message or the like, and completes the connection (S508). The IAB donor 110 performs backhaul (BH) path setup with the MBSR 103 via the MBSR 101, and establishes a BH RLC channel for data communication (S509). BH RLC is an abbreviation for Backhaul Radio Link Control. Through this series of sequences, the UE 123 connected to the MBSR 103 can perform data communication.

### <Second Embodiment: Relay request by disconnected MBSR to another MBSR (without UE)>

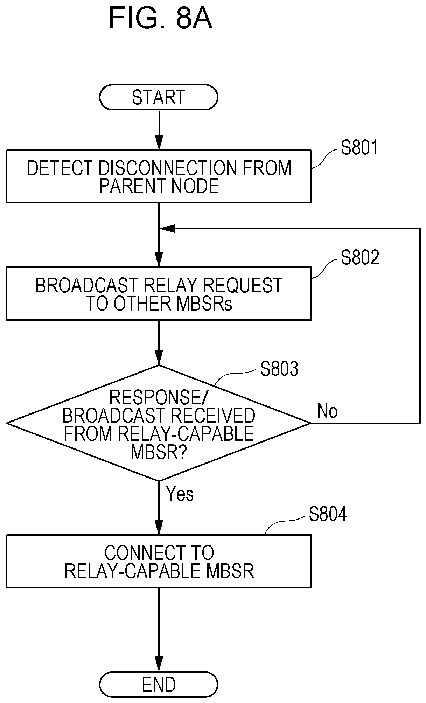

Fig. 8A illustrates a flowchart of the MBSR 103, which is disconnected from a parent node. After detecting the disconnection from the parent node in S801, the MBSR 103 broadcasts a relay request to other MBSRs (S802). In a case where a response or a broadcast is received from the relay-capable MBSR 101 (S803), the MBSR 103 attempts to connect to the relay-capable MBSR 101 (S804). If no other connectable MBSR is found in S803, the MBSR 103 searches for another relay-capable MBSR.

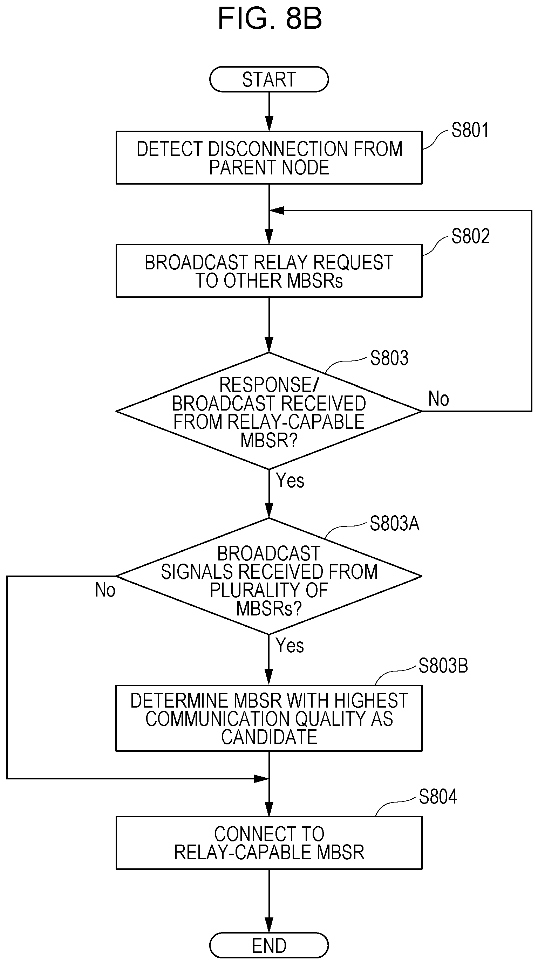

Fig. 8A assumes a case where there is one relay-capable MBSR (MBSR 101). However, as illustrated in Fig. 8B, responses or broadcasts may be received from a plurality of MBSRs (YES in S803A). In this case, for example, based on the responses or the broadcasts from the respective MBSRs, an MBSR having the highest communication quality may be determined as a relay candidate (S803B). For example, an MBSR having the highest received signal strength among received signals related to the responses or the broadcasts from the respective MBSRs may be determined as a relay candidate (S803B).

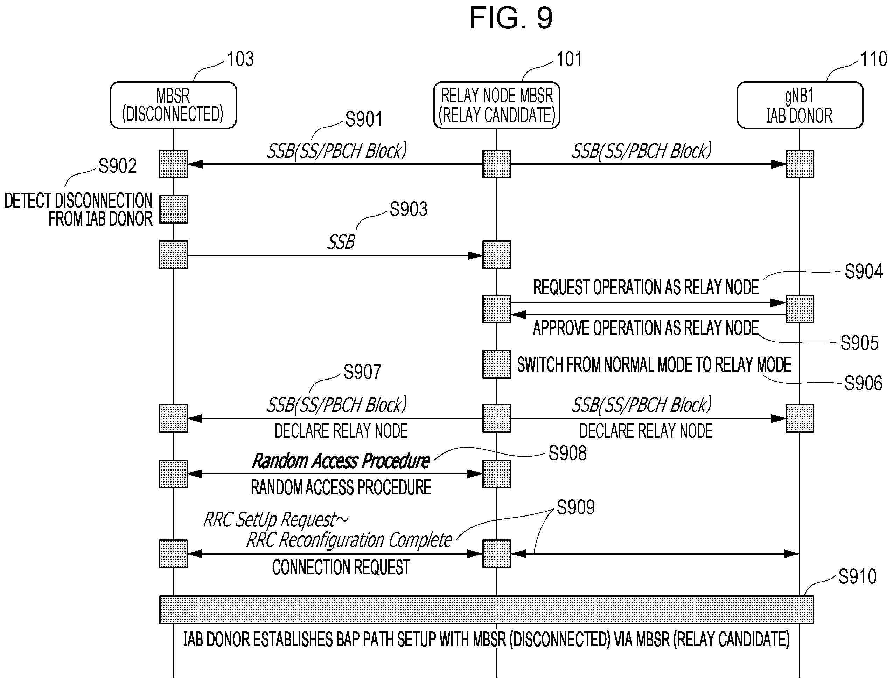

Fig. 9 is a sequence diagram illustrating a flow up to the establishment of a connection in response to the disconnected MBSR 103 requesting another MBSR 101 to perform relaying.

Also in the present embodiment, similarly to the first embodiment described above, it is assumed that the MBSR 101 is not connected to a UE and is operable in the relay mode in accordance with a response from the IAB donor 110 (see S405 in Fig. 4).

The MBSR 101 broadcasts that the MBSR 101 is operable as a relay node (S901). The MBSR 103 receives a broadcast signal from the MBSR 101. However, the MBSR 103 does not respond because the MBSR 103 is connected to a parent node at this stage. Thereafter, if the MBSR 103 becomes hidden behind an obstacle due to its movement, the wireless connection with the IAB donor 110 serving as a parent node is disconnected, and the MBSR 103 detects the disconnection from the parent node (S902).

The MBSR 103 has recognized, via the broadcast signal from the MBSR 101, that the MBSR 101 is relay-capable. Accordingly, the MBSR 103 transmits, to the MBSR 101, a message obtained by adding a parameter "relay request" to a spare field of an RRC SetUp Request message (S903).

Alternatively, if the broadcast is not received from the MBSR 101 in S901, the MBSR 103 may transmit broadcast information (SS/PBCH Block) additionally including information indicating a relay request. At this time, a message format for broadcasting a relay request may be included in an SIB1 message illustrated in Fig. 10A. The SIB1 message includes parameters such as SIB1-v1700-IEs, and a parameter "relay request" is added to "Reason of NonAccess", which is a spare field. Alternatively, a message format for transmitting the relay request may include a parameter "relay request" added to a "parameter providing notification of an IAB node" illustrated in Fig. 10B.

Upon receiving the relay request from the MBSR 103, the MBSR 101 confirms (requests) with the IAB donor 110 serving as a parent node whether the MBSR 101 may operate as a relay node (S904). The IAB donor 110 transmits, to the MBSR 101, a response indicating that the MBSR 101 may operate in the relay mode (S905). Upon receiving the response from the IAB donor 110, the MBSR 101 switches from the normal mode, which supports only a single hop, to the relay mode (S906). The MBSR 101 transmits a broadcast signal indicating that the MBSR 101 is operating in the relay mode (S907). The means for providing notification of operation in the relay mode is not limited to broadcasting, and an RRC Reconfiguration message of an RRC protocol may be used to transmit the notification to the MBSR 103 via unicasting. At this time, a message format for broadcasting a relay request may be included in an RRC Reconfiguration message of an RRC protocol illustrated in Fig. 11.

Since the MBSR 103 has recognized the MBSR 101, which is connectable as a parent node, the MBSR 103 determines to connect to the MBSR 101 serving as a parent node and performs a random access procedure (S908). The MBSR 103 requests a connection via an RRC SetUp Request message or the like and completes the connection (S909). The IAB donor 110 performs backhaul path setup with the MBSR 103 via the MBSR 101, and establishes a BH RLC channel for data communication (S910). Through this series of sequences, the UE 123 connected to the MBSR 103 can perform data communication.

In Fig. 9, the MBSR 101 operates in the relay mode in response to a request from the IAB donor 110 (S904, S905). In a modification, the MBSR 101 may operate in the relay mode in response to the relay request from the MBSR 103 (S903).

### <Third Embodiment: Relay request from IAB donor to MBSR (with UE)>

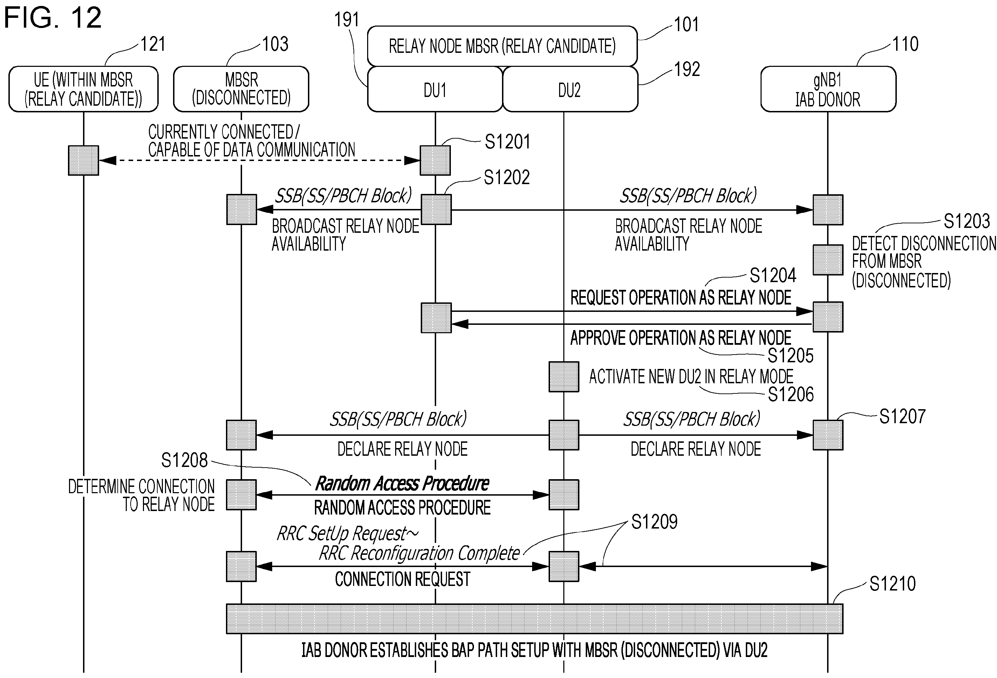

Fig. 12 is a sequence diagram illustrating that upon detecting the disconnected MBSR 103, the IAB donor 110 requests another MBSR 101 to perform relaying.

The present embodiment is based on a premise that the MBSR 101 having a relay function is connected to the UE 121 thereunder (S1201). That is, unlike the first and second embodiments described above, the present embodiment assumes that the MBSR 101 is connected to the UE 121. In this case, the MBSR 101 is operable in the relay mode with activation of a new DU (see S406 in Fig. 4) in accordance with a response from the IAB donor 110. If, unlike this assumption, the MBSR 101 is not connected to the UE 121, the configuration may be as in the first and second embodiments described above.

The MBSR 101 broadcasts that the MBSR 101 is operable as a relay node (S1202). The MBSR 103 receives a broadcast signal from the MBSR 101. However, the MBSR 103 does not respond because the MBSR 103 is connected to a parent node at this stage. Thereafter, if the MBSR 103 becomes hidden behind an obstacle due to its movement, the wireless connection with the IAB donor 110 serving as a parent node is disconnected. The IAB donor 110 detects that the connection with the MBSR 103 thereunder is disconnected (S1203). Then, if the IAB donor 110 can confirm that the MBSR 103 is in a connectable state based on position information or the like of the MBSR 103, the IAB donor 110 transmits a request for connection in the relay mode to the MBSR 101 as another child node connected thereto (S1204). In a transmission signal from the IAB donor 110 to the MBSR 101, a parameter "connection request to disconnected MBSR" is added to a spare field of an RRC Reconfiguration message of an RRC protocol in Fig. 6. Alternatively, a parameter "connection request to disconnected MBSR" may be added to a spare field of a PDU Type S901 of a BAP message in Fig. 7, and the request for connection may be transmitted.

The IAB donor 110 transmits, to the MBSR 101, a response indicating that the MBSR 101 may operate in the relay mode (S1205). Since the MBSR 101 is connected to the UE, simultaneously performing a relay connection with another node using the same DU may increase complexity. Accordingly, the MBSR 101 newly activates a DU2 (192) different from a DU1 (191) connected to the UE 121, and uses the DU2 (192) for relaying with the MBSR 103 (S1206). The MBSR 101 transmits a broadcast signal indicating that the MBSR 101 is operating in the relay mode (S1207).

Since the MBSR 103 has recognized the MBSR 101, which is connectable as a parent node through the reception of the broadcast signal described above, the MBSR 103 determines to connect to the MBSR 101 serving as a parent node and performs a random access procedure to the MBSR 101 (S1208). Thereafter, the MBSR 103 requests a connection via an RRC SetUp Request message or the like and completes the connection (S1209). The IAB donor 110 performs backhaul path setup with the MBSR 103 via the DU2 (192) of the MBSR 101, and establishes a BH RLC channel for data communication (S1210).

Through this series of sequences, the UE 123 connected to the MBSR 103 can perform data communication.

### <Fourth Embodiment: Relay request by disconnected MBSR to another MBSR (with UE)>

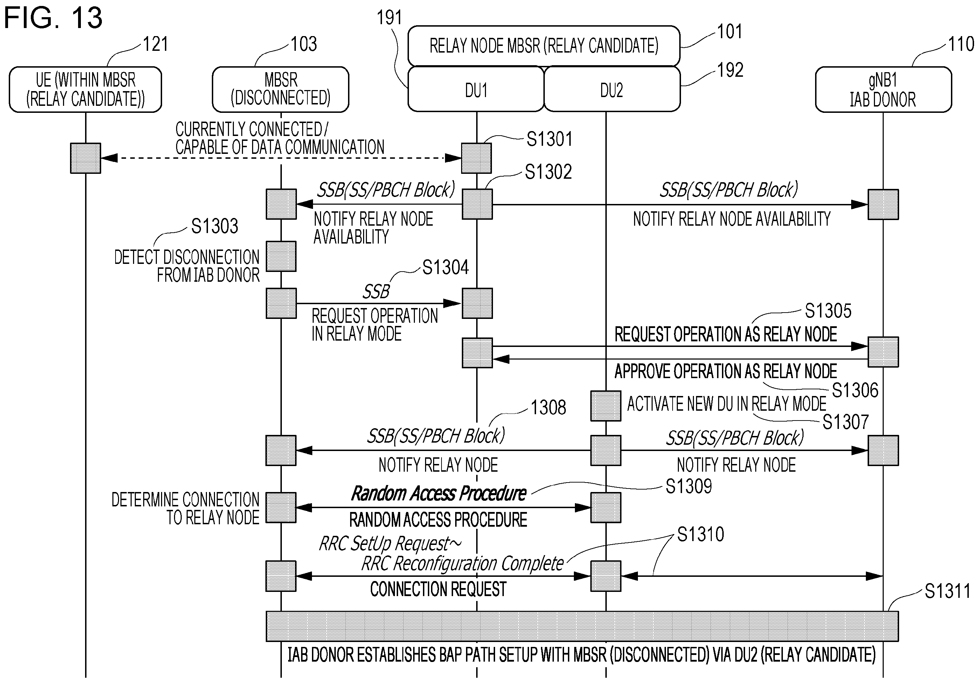

Fig. 13 is a sequence diagram illustrating a flow up to the establishment of a connection in response to the disconnected MBSR 103 requesting another MBSR 101 to perform relaying. However, the present embodiment is based on a premise that the MBSR 101, which performs relaying, is connected to the UE 121 and the UE 121 is connected to the DU1 (191) serving as a radio functional unit of the MBSR 101 and continues data communication (S1301). That is, unlike the first and second embodiments described above, the present embodiment assumes that the MBSR 101 is connected to the UE 121. In this case, the MBSR 101 is operable in the relay mode with activation of a new DU (see S406 in Fig. 4) in accordance with a response from the IAB donor 110. If, unlike this assumption, the MBSR 101 is not connected to the UE 121, the configuration may be as in the first and second embodiments described above.

The MBSR 101 broadcasts that the MBSR 101 is operable as a relay node (S1302). The MBSR 103 receives a broadcast signal from the MBSR 101. However, the MBSR 103 does not respond because the MBSR 103 is connected to a parent node at this stage. Thereafter, if the MBSR 103 becomes hidden behind an obstacle due to its movement, the wireless connection with the IAB donor 110 serving as a parent node is disconnected, and the MBSR 103 detects the disconnection from the parent node (S1303).

The MBSR 103 has recognized, via the broadcast signal from the MBSR 101, that the MBSR 101 is relay-capable. Accordingly, the MBSR 103 transmits, to the MBSR 101, a message obtained by adding a parameter "relay request" to a spare field of an RRC SetUp Request message (S1304). Alternatively, as in the third embodiment, if the broadcast is not received in S1302, the MBSR 103 may transmit relay-capable broadcast information (SS/PBCH Block) additionally including information indicating a relay request.

Upon receiving the relay request from the MBSR 103, the MBSR 101 confirms with the IAB donor 110 serving as a parent node whether the MBSR 101 may operate as a relay node (S1305). The IAB donor 110 transmits, to the MBSR 101, a response indicating that the MBSR 101 may operate in the relay mode (S1306).

In a case where the MBSR 101 operates in the "relay mode", performing a connection with another node via the DU1 (191) connected to the UE 121 increases complexity. Accordingly, a new DU2 (192) different from the DU1 (191) connected to the UE 121 is newly activated and used for relaying with the MBSR 103 (S1307).

The MBSR 101 transmits a broadcast signal indicating that the MBSR 101 is operating in the relay mode (S1308). The means for providing notification of operation in the relay mode is not limited to broadcasting, and an RRC Reconfiguration message may be used to transmit the notification to the MBSR 103.

Since the MBSR 103 has recognized the MBSR 101, which is connectable as a parent node, the MBSR 103 determines to connect to the MBSR 101 serving as a parent node and performs a random access procedure to the MBSR 101 (S1309). Thereafter, the MBSR 103 requests a connection via an RRC SetUp Request message or the like and completes the connection (S1310). The IAB donor 110 performs backhaul path setup with the MBSR 103 via the DU2 (192) of the MB SR 101, and establishes a BH RLC channel for data communication (S1311). Through this series of sequences, the UE 123 connected to the MBSR 103 can perform data communication.

### <Fifth Embodiment: Relay request from IAB donor to another MBSR (with UE)>

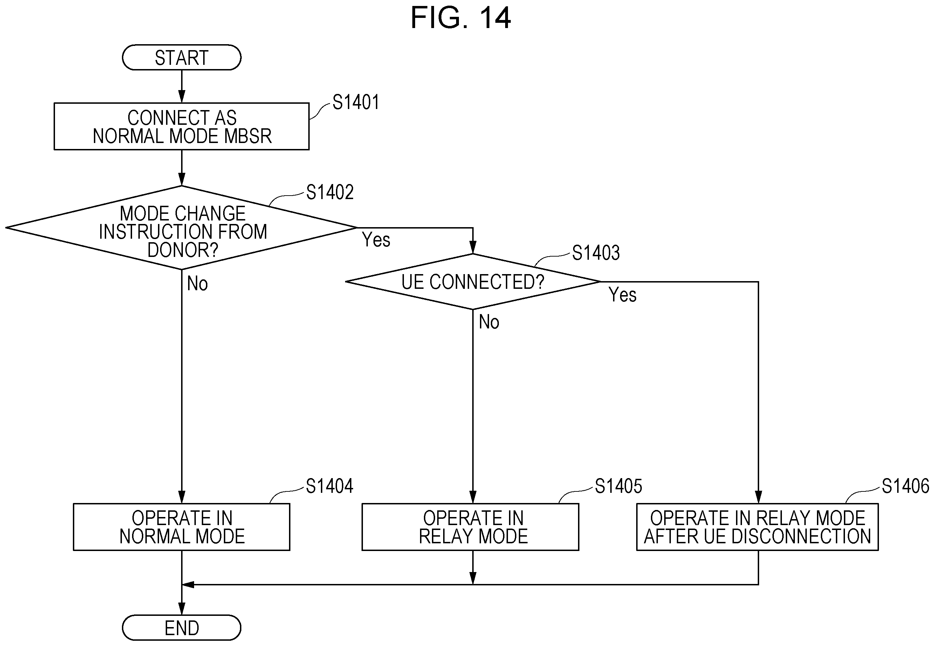

Fig. 14 illustrates a processing flow for mode determination for an MBSR in the present embodiment (the same applies to a sixth embodiment described below). The MBSR is connected to a network as an MBSR in the normal mode (S1401). If a mode change instruction from an IAB donor is received (S1402), the MBSR checks the presence or absence of a UE connected thereto (S1403). If a connected UE is located, the MBSR releases the connection with the connected UE and then operates in the relay mode (S1406). If no connected UE is located, the MBSR operates in the relay mode (S1405). If no change instruction is received in S1402, the MBSR continues to operate in the normal mode (S1404).

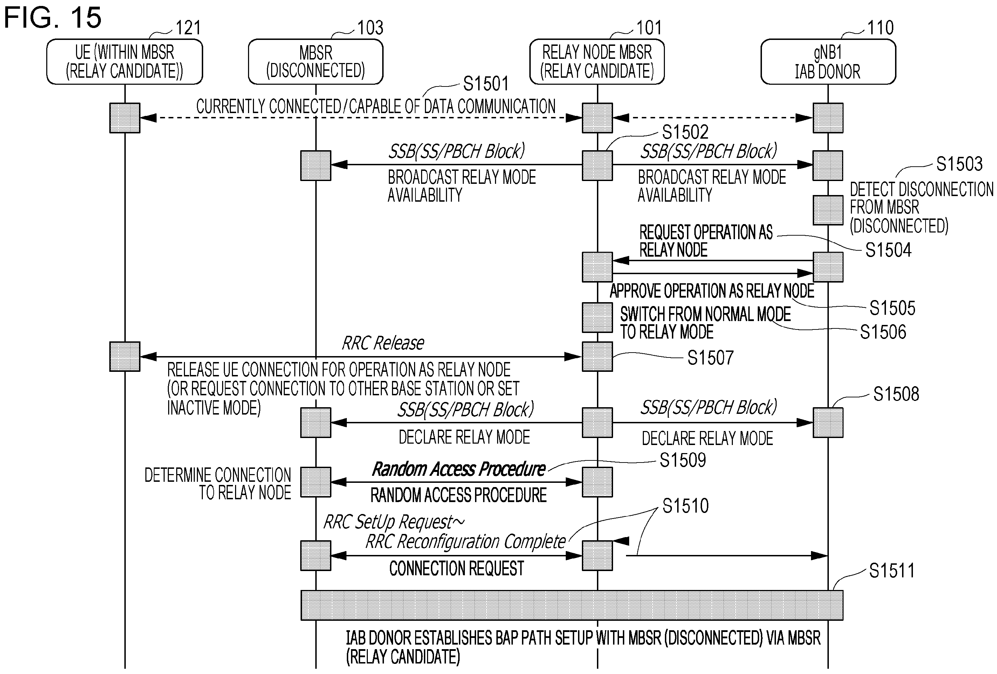

Fig. 15 is a sequence diagram illustrating a flow up to the establishment of a connection in response to an IAB donor requesting another MBSR 101 to perform relaying after detecting the disconnection of the MBSR 103.

Unlike the first and second embodiments described above, the present embodiment assumes that the MBSR 101 is connected to the UE 121. In this case, the MBSR 101 is operable in the relay mode after releasing the connection with the connected UE (see S1406 in Fig. 14) in accordance with a response from the IAB donor 110. If, unlike this assumption, the MBSR 101 is not connected to the UE 121, the configuration may be as in the first and second embodiments described above.

Specifically, referring to Fig. 15, in the present embodiment, another MBSR has the UE 121 thereunder, and the UE 121 is connected to the MBSR 101 and continues data communication (S1501).

The MBSR 101 broadcasts that the MBSR 101 is operable as a relay node (S1502). The MBSR 103 receives a broadcast signal from the MBSR 101. However, the MBSR 103 does not respond because the MBSR 103 is connected to a parent node at this stage. Thereafter, if the MBSR 103 becomes hidden behind an obstacle due to its movement, the wireless connection with the IAB donor 110 serving as a parent node is disconnected. Upon detecting that the connection with the MBSR 103 under the IAB donor 110 is disconnected (S1503), the IAB donor 110 transmits, to the MBSR 101, which is another child node connected thereto, a request for connection in the relay mode (S1504). At this time, the connection request may be transmitted on condition that it can be confirmed based on position information or the like of the MBSR 103 that the MBSR 103 is in a connectable state. In a transmission signal from the IAB donor 110 to the MBSR 101, a parameter "connection request to disconnected MBSR" is added to a spare field of an RRC Reconfiguration message of an RRC protocol in Fig. 6. Alternatively, a parameter "connection request to disconnected MBSR" may be added to a spare field of a PDU Type S901 of a BAP message in Fig. 7, and the request for connection may be transmitted.

The IAB donor 110 transmits, to the MBSR 101, a response indicating that the MBSR 101 may operate in the relay mode (S1505). If the MBSR 101 switches from the normal mode to the relay mode and operates in the relay mode, performing a connection with another node while maintaining the connection with the UE increases complexity. Accordingly, the MBSR 101 releases the connection with the UE 121 by using an RRC Release message (or provides notification of another connectable IAB node) and operates exclusively for relaying with the MBSR 103 (S1506, S1507).

The MBSR 101 transmits a broadcast signal indicating that the MBSR 101 operates in the relay mode (S1508). Since the MBSR 103 has recognized the MBSR 101, which is connectable as a parent node, the MBSR 103 determines to connect to the MB SR 101 serving as a parent node. Then, the MBSR 103 performs a random access procedure for connecting to the MBSR 101 (S1509), requests a connection via an RRC SetUp Request message or the like, and completes the connection (S1510). The IAB donor 110 performs backhaul path setup with the MBSR 103 via the MBSR 101, and establishes a BH RLC channel for data communication (S1511). Through this series of sequences, the UE 123 connected to the MBSR 103 can perform data communication.

### <Sixth Embodiment: Relay request by disconnected MBSR to another MBSR (with UE)>

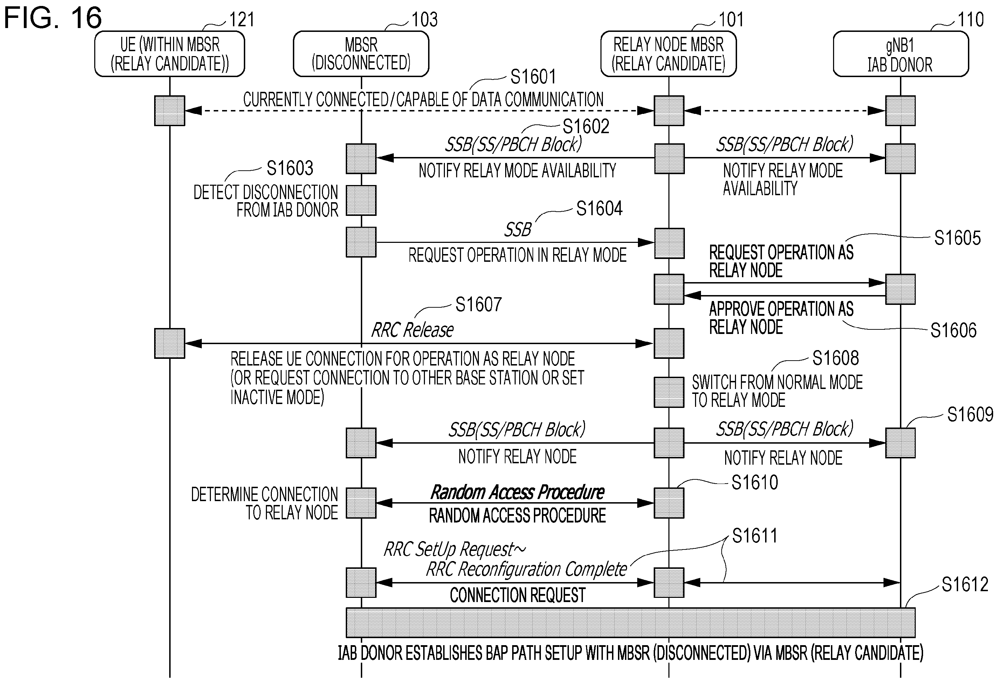

Fig. 16 is a sequence diagram illustrating a flow up to the establishment of a connection in response to the disconnected MBSR 103 requesting another MBSR 101 to perform relaying.

Unlike the first and second embodiments described above, the present embodiment assumes that the MBSR 101 is connected to the UE 121. In this case, the MBSR 101 is operable in the relay mode after releasing the connection with the connected UE (see S1406 in Fig. 14) in accordance with a response from the IAB donor 110. If, unlike this assumption, the MBSR 101 is not connected to the UE 121, the configuration may be as in the first and second embodiments described above.

Specifically, referring to Fig. 16, in the present embodiment, another MBSR has the UE 121 thereunder, and the UE 121 is connected to the MBSR 101 and continues data communication (S1601).

The MBSR 101 broadcasts that the MBSR 101 is operable as a relay node (S1602). The MBSR 103 receives a broadcast signal from the MBSR 101. However, the MBSR 103 does not respond because the MBSR 103 is connected to a parent node at this stage. Thereafter, if the MBSR 103 becomes hidden behind an obstacle due to its movement, the wireless connection with the IAB donor 110 serving as a parent node is disconnected, and the MBSR 103 detects the disconnection from the parent node (S1603).

The MBSR 103 has recognized, via the broadcast signal from the MBSR 101, that the MBSR 101 is relay-capable. Accordingly, the MBSR 103 transmits, to the MBSR 101, a message obtained by adding a parameter "relay request" to a spare field of an RRC SetUp Request message (S1604). Alternatively, as in the third embodiment, if the broadcast is not received in S1602 (indicating that the MBSR 101 is operable as a relay node), the MBSR 103 may transmit relay-capable broadcast information (SS/PBCH Block) additionally including information indicating a relay request.

Upon receiving the relay request from the MBSR 103, the MBSR 101 confirms with the IAB donor 110 whether the MBSR 101 may operate as a relay node (S1605). The IAB donor 110 transmits, to the MBSR 101, a response indicating that the MBSR 101 may operate in the relay mode (S1606). If the MBSR 101 operates in the "relay mode", performing a connection with another node while maintaining the connection with the UE increases complexity. Accordingly, the MBSR 101 releases the connection with the UE 121 and is used for relaying with the MBSR 103 (S1607, S1608).

The MBSR 101 transmits a broadcast signal indicating that the MBSR 101 is operating in the relay mode (S1609). The means for providing notification of operation in the relay mode is not limited to broadcasting, and an RRC Reconfiguration message may be used to transmit the notification to the MBSR 103. Since the MBSR 103 has recognized the MBSR 101, which is connectable as a parent node, the MBSR 103 determines to connect to the MBSR 101 serving as a parent node and performs a random access procedure to connect to the MBSR 101 (S1610). Thereafter, the MBSR 103 requests a connection via an RRC SetUp Request message or the like and completes the connection (S1611). The IAB donor 110 performs backhaul (BH) path setup with the MBSR 103 via the DU2 (192) of the MBSR 101, and establishes a BH RLC channel for data communication (S1612).

Through this series of sequences, the UE 123 connected to the MBSR 103 can perform data communication.

### <Other Embodiments>

In the embodiments described above, a case is exemplified in which upon receiving a relay request, an MBSR starts operating in the relay mode. However, the MBSR may be configured to be capable of rejecting the relay request as necessary. Upon receiving a relay request, an MBSR can determine to reject the relay request according to its resource congestion status or the like. Upon determining to reject the relay request, the MBSR notifies a source apparatus from which the relay request is transmitted of a message indicating that the relay request is rejected. In this case, upon receiving the message indicating the rejection, the source apparatus may simply transmit a relay request to another candidate apparatus. For example, in cases such as a case where frequency resources available for the MBSR are already congested due to existing communication, or a case where the number of UEs already connected to the MBSR is greater than or equal to a predetermined number, the MBSR may reject the relay request upon receiving the relay request. This process makes it possible to prevent adverse effects on existing communication.

The present embodiment may also be implemented by processing in which a program for implementing one or more functions of each of the embodiments described above is supplied to a system or an apparatus via a network or a storage medium, and one or more processors in a computer of the system or the apparatus read and execute the program. The present embodiment may also be implemented by circuitry (e.g., an ASIC or an FPGA) that implements one or more functions.

Although embodiments have been described in detail, the present invention is not limited to any specific embodiment, and various modifications and changes may be made within the scope as defined in the claims. Also, all or a plurality of constituent elements of the embodiments described above may be combined.

Regarding the embodiments described above, the following appendices are further disclosed.

### [Appendix 1]

A communication apparatus having an MBSR (Mobile Base Station Relay) operation function, wherein
the communication apparatus is operable in a first mode in which only another communication apparatus having the MBSR operation function is connected to a DU (Distribution Unit) of the communication apparatus, the first mode being a mode in which communication between the other communication apparatus and an IAB (Integrated Access and Backhaul) donor is relayed.

### [Appendix 2]

The communication apparatus according to Appendix 1, including mode switching means for switching an operation mode between the first mode and a second mode in which only a UE (User Equipment) is connected to the DU of the communication apparatus.

### [Appendix 3]

The communication apparatus according to Appendix 1 or 2, wherein the communication apparatus permits only a connection from another MBSR out of a UE and the other MBSR in a case where the communication apparatus operates in the first mode.

### [Appendix 4]

The communication apparatus according to Appendix 2, wherein the communication apparatus activates a new DU in a case where the communication apparatus switches from the second mode to the first mode while being connected to the UE.

### [Appendix 5]

The communication apparatus according to Appendix 2 or 4, wherein the mode switching means switches from the second mode to the first mode in response to a relay request from the IAB donor or a relay request from the other communication apparatus.

### [Appendix 6]

The communication apparatus according to any one of Appendices 1 to 5, including transmission means for transmitting, to the IAB donor or the other communication apparatus, a notification indicating that the communication apparatus is operable in the first mode or is operating in the first mode.

### [Appendix 7]

The communication apparatus according to any one of Appendices 1 to 6, wherein the transmission means uses an SSB (Synchronization Signal block) message or an RRC message.

### [Appendix 8]

A communication apparatus having an MBSR (Mobile Base Station Relay) operation function, wherein
in response to a relay request from an IAB (Integrated Access and Backhaul) donor, the communication apparatus performs relaying for another communication apparatus having the MBSR operation function so as to allow the other communication apparatus to communicate with the IAB donor via the communication apparatus.

### [Appendix 9]

The communication apparatus according to Appendix 8, wherein the communication apparatus changes a relay method for the other communication apparatus based on whether the communication apparatus is connected to a UE (User Equipment) when the relay request is received.

### [Appendix 10]

The communication apparatus according to Appendix 9, wherein, in a case where the communication apparatus is connected to the UE when the relay request is received, in response to the relay request, the communication apparatus activates a new DU (Distributed Unit) and performs relaying for the other communication apparatus by using the activated new DU.

### [Appendix 11]

The communication apparatus according to Appendix 9 or 10, wherein, in a case where the communication apparatus is connected to the UE when the relay request is received, in response to the relay request, the communication apparatus performs relaying for the other communication apparatus after releasing a connection with the UE connected to the communication apparatus.

The present invention is not limited to the embodiments described above, and may be changed and modified in various ways without departing from the spirit and scope of the present invention. Accordingly, to apprise the public of the scope of the present invention, the following claims are made.

This application is based upon and claims the benefit of priority from Japanese Patent Application No. 2023-216606 filed December 22, 2023, the disclosure of which is incorporated herein in its entirety by reference.

### Reference Signs List

- 100: communication system
- 101: MBSR
- 102: MBSR
- 103: MBSR
- 110: IAB donor (main base station)
- 111: vehicle
- 112: vehicle
- 113: vehicle
- 130: obstacle
- 131: obstacle
- 140: wired link
- 141: wireless backhaul link
- 142: wireless backhaul link
- 150: core network
- 201: control unit
- 202: storage unit
- 203: wireless communication unit
- 204: communication antenna control unit
- 205: GPS communication unit
- 206: GPS antenna control unit
- 302: signal transmission unit (example of transmission means)
- 303: signal reception unit
- 304: data storage unit
- 305: connection control unit
- 306: network configuration information management unit
- 307: relay request processing unit
- 308: signal generation unit
- 309: GPS signal processing unit
- 310: mode switching unit (example of mode switching means)
- 402: control unit
- 403: storage unit
- 404: wireless communication unit
- 405: communication antenna control unit
- 502: signal transmission unit
- 503: signal reception unit
- 504: data storage unit
- 505: connection control unit
- 506: broadcast information detection unit
- 507: neighboring node determination unit
- 508: mode change instruction generation unit.

## Claims

1. A communication apparatus having an MBSR (Mobile Base Station Relay) operation function, wherein
the communication apparatus is operable in a first mode in which only another communication apparatus having the MBSR operation function is connected to a DU (Distribution Unit) of the communication apparatus, the first mode being a mode in which communication between the other communication apparatus and an IAB (Integrated Access and Backhaul) donor is relayed.

2. The communication apparatus according to claim 1, comprising mode switching means for switching an operation mode between the first mode and a second mode in which only a UE (User Equipment) is connected to the DU of the communication apparatus.

3. The communication apparatus according to claim 1,
wherein the communication apparatus permits only a connection from another MBSR out of a UE and the other MBSR in a case where the communication apparatus operates in the first mode.

4. The communication apparatus according to claim 2,
wherein the communication apparatus activates a new DU in a case where the communication apparatus switches from the second mode to the first mode while being connected to the UE.

5. The communication apparatus according to claim 2,
wherein the mode switching means switches from the second mode to the first mode in response to a relay request from the IAB donor or a relay request from the other communication apparatus.

6. The communication apparatus according to any one of claims 1 to 5, comprising transmission means for transmitting, to the IAB donor or the other communication apparatus, a notification indicating that the communication apparatus is operable in the first mode or is operating in the first mode.

7. The communication apparatus according to claim 6,
wherein the transmission means uses an SSB (Synchronization Signal block) message or an RRC message.

8. A communication apparatus having an MBSR (Mobile Base Station Relay) operation function, wherein
in response to a relay request from an IAB (Integrated Access and Backhaul) donor or a relay request from another communication apparatus having the MBSR operation function, the communication apparatus performs relaying for the other communication apparatus so as to allow the other communication apparatus to communicate with the IAB donor via the communication apparatus.

9. The communication apparatus according to claim 8,
wherein the communication apparatus changes a relay method for the other communication apparatus based on whether the communication apparatus is connected to a UE (User Equipment) when the relay request is received.

10. The communication apparatus according to claim 9, wherein, in a case where the communication apparatus is connected to the UE when the relay request is received, in response to the relay request, the communication apparatus activates a new DU (Distributed Unit) and performs relaying for the other communication apparatus by using the activated new DU.

11. The communication apparatus according to claim 9, wherein, in a case where the communication apparatus is connected to the UE when the relay request is received, in response to the relay request, the communication apparatus performs relaying for the other communication apparatus after releasing a connection with the UE connected to the communication apparatus.

12. A control method for a communication apparatus having an MBSR (Mobile Base Station Relay) operation function, the control method comprising:
a step of forming a first mode in which only another communication apparatus having the MBSR operation function is connected to a DU (Distribution Unit) of the communication apparatus, the first mode being a mode in which communication between the other communication apparatus and an IAB (Integrated Access and Backhaul) donor is relayed.

13. A program for causing a computer of a communication apparatus having an MBSR (Mobile Base Station Relay) operation function to execute:
a step of forming a first mode in which only another communication apparatus having the MBSR operation function is connected to a DU (Distribution Unit) of the communication apparatus, the first mode being a mode in which communication between the other communication apparatus and an IAB (Integrated Access and Backhaul) donor is relayed.
